# EUROPÄISCHE PATENTSCHRIFT

(11) **EP 1 614 455 B1**
(45) Veröffentlichungstag und Bekanntmachung des Hinweises auf die Patenterteilung: **13.02.2008**
(21) Anmeldenummer: 05103954.3
(22) Anmeldetag: 11.05.2005
(51) Int. Cl.: B01D 35/143, F01M 11/03

(54) **Flüssigkeitsfilter**
Liquid filter
Filtre à liquide

(30) Priorität: 28.06.2004 DE 102004031209
(43) Veröffentlichungstag der Anmeldung: 11.01.2006
(73) Patentinhaber: MANN+HUMMEL GmbH, 71638 Ludwigsburg (DE)
(72) Erfinder: Weindorf, Martin, 70806, Kornwestheim (DE); Storch, Thomas, 71711, Murr (DE); Zeiher, Harald, 74369, Löchgau (DE)

(56) Entgegenhaltungen:
- EP-A- 0 269 054
- EP-A- 1 151 783
- EP-A- 1 400 270
- DE-A1- 2 350 344
- DE-A1- 2 460 073
- US-A- 3 144 405

## Beschreibung

### Stand der Technik

Die Erfindung betrifft ein Flüssigkeitsfilter nach dem Oberbegriff des Patentanspruches 1.

Bei einem Wechsel eines Flüssigkeitsfilterelementes besteht häufig das Problem, dass die Restflüssigkeit beim Aufschrauben des Deckels oder beim Wechseln des Wegwerffilters in die Umwelt gelangen kann. Besonders kritisch ist dies bei Wechselfiltern, die stehend, also mit der Öffnung nach unten, eingebaut sind.

Die DE 199 61 580 A1 zeigt einen Flüssigkeitsfilter mit Ablass für Flüssigkeitsrückstände. Der Flüssigkeitsfilter, insbesondere Ölfilter für das Schmieröl einer Brennkraftmaschine, weist ein hängendes Gehäuse mit einem darin angeordneten wechselbaren Filterelement auf. Am tiefsten Punkt des Gehäusetopfs ist eine Ablauföffnung angeordnet, welche beim Aufschrauben des Gehäusetopfs automatisch geöffnet wird, wobei das Öl daraufhin durch die Ablauföffnung austritt und in einem separaten Gehäuse aufgefangen werden muss.

Die US 3,724,665 weist einen stehenden, also mit der Öffnung nach unten gerichteten, Ölwechselfilter auf. Filtergehäuse und Filterelement sind hierbei fest miteinander verbunden, so dass bei einem Wechsel beides getauscht werden muss. Um zu vermeiden, dass bei einem Losschrauben des Wechselfilters der gesamte Volumeninhalt des Wechselfilters an Öl aus dem Gehäuse über den Anschraubflansch herausläuft, ist im Inneren des Wechselfilters ein Hohlzylinder angeordnet, welcher sich axial, konzentrisch zum Filterelement, über fast die gesamte Höhe des Wechselfilters erstreckt. Das im Inneren des Hohlzylinders vorhandene Öl wird dabei bei einem Wechsel des Filters wieder in den Ölkreislauf zurückgegeben und verringert so die Absolutmenge des austretenden Öles. Nachteilig ist hierbei das immer noch vorhandene, auslaufende Ölvolumen, auch wenn es verringert ist, welches aus umweltrechtlichen Gründen auf irgendeine Art und Weise aufgefangen werden muss. Des Weiteren erfolgt durch das auslaufende Öl eine starke Verschmutzung des Anschraubflansches und der eventuell darunter liegenden Aggregate.

Aus der EP 1 151 783 ist eine Filteranordnung bekannt, bei der ein Filterelement in ein Gehäuse eingesetzt ist, wobei die Filteranordnung im Gegenstrom reinigbar ist. Der Entleerungsvorgang wird durch Öffnen eines vom Bediener umzustellenden Ventils verursacht.

Aus der EP 0 269 054 ist ein Wechselfilter bekannt, der durch eine manuelle Betätigung in Form einer axialen Verschiebung entleert werden kann.

Die Aufgabe der Erfindung ist es nun, einen Flüssigkeitsfilter mit auf dem Kopf stehendem Wechselfilter zu schaffen, welcher einfach zu entleeren, kostengünstig im Aufbau und ebenso sicher wie einfach in der Bedienung ist. Eine weitere Aufgabe der Erfindung ist es, eine Ölkontamination durch den Wechsel des Wechselfilters weitestgehend zu vermeiden.

Diese Aufgabe wird durch die Merkmale des Hauptanspruchs 1 gelöst.

### Vorteile der Erfindung

Die Erfindung betrifft einen Flüssigkeitsfilter, insbesondere für das Schmieröl einer Brennkraftmaschine, welcher wenigstens einen Wechselfilter und ein damit verbundenes Trägermodul aufweist. Der Wechselfilter weist ein Gehäuse mit einem Einlass und einem Auslass für die zu filtrierende Flüssigkeit auf, wobei ein Teil des Gehäuses durch einen Gehäusetopf gebildet ist, wobei dieser Gehäusetopf mit der Öffnung nach unten ausgerichtet ist. In dem Gehäuse ist ein Filtermedium dichtend zwischen Ein- und Auslass angeordnet, wobei der Wechselfilter mit der im wesentlichen nach unten weisenden Öffnung dichtend an dem Trägermodul befestigt ist. Der Gehäusetopf ist hierbei bevorzugt zylindrisch aufgebaut, kann aber auch andere Grundformen beinhalten, und das Filtermedium ist hierbei bevorzugt hohlzylindrisch und zick-zack-förmig gefaltet, aus einem Papier oder einem Synthetikmedium gebildet. Die Öffnung des Gehäusetopfes ist mit einem Enddeckel dichtend verschlossen, wobei der Enddeckel bevorzugt unlösbar mit dem Gehäusetopf verbunden ist. In dem Enddeckel sind die oben beschriebenen Einlass- und Auslassöffnungen angeordnet und ebenso weist der Enddeckel ein bevorzugt axial wirkendes Dichtmittel zur Abdichtung der Verbindung zwischen Wechselfilter und Trägermodul auf. In dem Trägermodul sind unter anderem auch die Zuführ- und Abführleitungen der Flüssigkeit, welche durch den Flüssigkeitsfilter geleitet wird, angeordnet. Erfindungsgemäß weist das Trägermodul Mittel zur halbautomatischen Entleerung des Wechselfilters auf, derart, dass mittels einer äußeren Betätigung über das Öffnen eines Durchgangs eine nahezu vollständige Entleerung des Wechselfilters mit Trägermodul veranlasst wird und dieser Durchgang nach dem Entleerungsvorgang automatisch wieder verschlossen wird. Das Trägermodul, welches den Wechselfilter aufnimmt, kann zusätzlich weitere Funktionselemente beinhalten, wie beispielsweise Ölkühler, Bypassfilter oder Zentrifugen, und dient zusätzlich der Befestigung am Motor oder im Motorraum, wobei es ebenfalls für die Einbindung der Funktionselemente in den Flüssigkeitskreislauf dient. Um das Auslaufen der im Wechselfilter vorhandenen Flüssigkeit beim Austausch des Wechselfilters zu vermeiden, lässt sich die Flüssigkeit hier in vorteilhafter Weise durch das Mittel zur halbautomatischen Entleerung des Wechselfilters in einen druckfreien Bereich, wie z. B. das Kurbelgehäuse oder die Ölwanne, des Flüssigkeitssystems ablassen. Das Mittel zur halbautomatischen Entleerung des Wechselfilters wird hierbei äußerlich über eine Krafteinwirkung betätigt, wodurch im Inneren des Trägermoduls entsprechende Kanäle freigegeben werden. Zur Vermeidung eines Motorschadens wird der freigegebene Durchgang bei einem Start der Brennkraftmaschine automatisch wieder verschlossen, um ein Füllen des Wechselfilters und damit die Wiederaufnahme der Filtration und das Wiederherstellen des Flüssigkeitskreislaufes zu gewährleisten.

Die erfindungsgemäße Lösung bietet also die Vorteile, dass einerseits ein Ausfließen der im Wechselfilter gespeicherten Flüssigkeit beim Abschrauben des Wechselfilters vermieden wird und so ein Verschmutzen des Trägermoduls, der um das Trägermodul angeordneten Motorbauteile und der Umwelt verhindert wird, sowie andererseits durch das automatische Wiederverschließen des Durchgangs ein sofortiger Druckaufbau im Flüssigkeitssystem möglich ist und so einem Motorschaden, durch z. B. ein Vergessen des Wiederverschließens, vorgebeugt wird. Weiterhin wird so eine Rücklaufsperre im Wechselfilter vermieden.

Gemäß einer vorteilhaften Ausgestaltung der Erfindung ist das Mittel zur halbautomatischen Entleerung eine Kolbenstange, welche axial beweglich ist und wenigstens einen Kanal innerhalb des Trägermoduls durch an der Kolbenstange angeordnete Dichtmittel verschließt. Die Dichtmittel sind dabei korrespondierend mit der Kolbenstange verbunden, müssen also nicht direkt und fest mit der Kolbenstange verbunden sein. Das axiale Verschieben der Kolbenstange innerhalb des Trägermoduls bewirkt ein Öffnen bzw. Schließen des Kanals, so dass die Entleerung des Wechselfilters vonstatten geht. Die Kolbenstange ist dabei bevorzugt rund als Drehteil ausgeführt und kann so einfach und kostengünstig hergestellt werden.

Alternativ hierzu ist es vorteilhaft, die Dichtmittel an der Kolbenstange durch eine radiale Spaltabdichtung zu ersetzen. Durch Einhaltung enger Toleranzen zwischen Kolbenstange, in der Kolbenstange umlaufender Nut und Gehäusewandung ergibt sich so auch ohne Dichtmittel eine ausreichende Dichtwirkung. Bei besonders ausgelegten Toleranzen kann auch auf die umlaufende Nut in der Kolbenstange verzichtet werden.

Eine vorteilhafte Ausbildung des Erfindungsgedankens ist dadurch gegeben, dass Roh- und Reinseite des Wechselfilters und ein druckloser Flüssigkeitsablauf durch das Mittel zur halbautomatischen Entleerung im Betriebszustand der Brennkraftmaschine dichtend voneinander getrennt sind. Bei stehender Brennkraftmaschine werden dann anschließend, nach Betätigung des Entleerungsmittels, Roh- und Reinseite des Wechselfilters mit dem drucklosen Ablauf verbunden, wobei die gereinigte und die ungereinigte Flüssigkeit, die noch im Wechselfilter und einem Teil des Trägermoduls vorhanden ist, über den drucklosen Ablauf kontrolliert abfließt. Der drucklose Ablauf ist dann vorzugsweise bei einem Ölfilter mit dem Kurbelgehäuse verbunden, so dass das im Wechselfilter und in einem Teil des Trägermoduls vorhandene Öl kontrolliert ohne Verschmutzung der Umgebung in die Ölwanne zurückfließen kann. Dadurch wird erreicht, dass bei einem Abschrauben des Wechselfilters nicht unnötig Öl aus dem Wechselfilter über das Trägermodul läuft und an die Umgebung abgegeben wird.

Es ist vorteilhaft, das Mittel zur halbautomatischen Entleerung werkzeug- und fremdkraftlos von Hand betätigbar auszuführen. Dies kann z. B. dadurch realisiert werden, dass hier eine Zugstange mit einem Griff, wie auch immer geartet, ausgestaltet ist, so dass ein einfaches Ziehen an dem Griff die jeweiligen Verbindungen freigibt und so ein Entleeren des Wechselfilters gestartet werden kann. Die zur Betätigung notwendigen Kräfte sind dabei so gering zu halten, dass dies einfach, ohne eine zusätzlich unterstützende elektrische, hydraulische oder pneumatische Kraft zu bewerkstelligen ist.

Gemäß einer alternativen Ausgestaltung der Erfindung ist das Mittel zur halbautomatischen Entleerung zur Betätigung korrespondierend mit einem Aktuator verbunden, wobei der Aktuator beim Vorliegen eines bestimmten Eingangsignals eine Betätigung des Entleerungsmittels in Gang setzt. Der Aktuator kann hierbei ein im Trägermodul oder außen am Trägermodul angebrachter Elektromotor, pneumatischer oder hydraulischer Antrieb sein, welcher über einen außen am Aktuator angebrachten Schalter oder über einen Schalter, welcher in Innenraum des Kraftfahrzeugs betätigt wird, aktiviert werden kann. Eine weitere denkbare Möglichkeit wäre, dass durch den Lösevorgang des Wechselfilters ein Signal direkt an den Aktuator weitergeleitet wird zur Entleerung des Wechselfilters, wobei hierbei das Signal nach einem Bruchteil einer Lösedrehbewegung des Wechselfilters ausgesendet werden muss und dass der Lösevorgang erst nach vollständiger Entleerung des Wechselfilters weiter fortgeführt werden darf. Nach Abschluss der Entleerung, dies kann beispielsweise nach einem gewissen vordefinierten Zeitinterwall oder durch ein zusätzliches Sensorsignal erfolgen, muss dann weiterhin gewährleistet sein, dass das Entleerungsmittel wieder in den Grundzustand versetzt wird.

Gemäß einer Ausgestaltung der Erfindung trennt das Mittel zur halbautomatischen Entleerung wenigstens zwei Bereiche innerhalb des Trägermoduls dichtend voneinander, wobei ein erster Bereich mit der Umgebung kommuniziert und ein zweiter Bereich mit Flüssigkeit beaufschlagt ist. Bei einer Betätigung des Entleerungsmittels wird so der erste Bereich mit Umgebungsdruck beaufschlagt, d. h. es besteht eine direkte Verbindung vom ersten Bereich in den das Trägermodul umgebenden Bereich, und der zweite Bereich des Trägermoduls ist mit Flüssigkeit gefüllt, die jedoch aufgrund der stehenden Brennkraftmaschine und der dadurch nicht angetriebenen Flüssigkeitspumpe drucklos ist. Wird dann nach Abschluss der Entleerung die Brennkraftmaschine wieder gestartet und die in der Brennkraftmaschine vorhandene Ölpumpe baut den Öldruck im Ölsystem wieder auf, wird so im zweiten Bereich ein hydraulischer Öldruck aufgebaut, welcher das Mittel gegen den geringeren Umgebungsdruck des ersten Bereiches automatisch wieder in die verschlossene Ausgangslage zurücksetzt. Durch die Möglichkeit der direkten Kommunikation des ersten Bereiches mit der Umgebung kann das im ersten Bereich gespeicherte drucklose Gasvolumen direkt wieder an die Umgebung abgegeben werden und es baut sich kein Gegendruck auf. Auf diese Art und Weise wird konstruktiv gewährleistet, dass der neu eingesetzte Wechselfilter nach dem Start der Brennkraftmaschine automatisch wieder gefüllt wird und so keine Unterbrechung der Schmierung erfolgt. Durch das automatische Schließen des Entleerungsmittels können Fehler, z. B. durch Vergessen eines manuellen Schließens, und daraus resultierende Schäden an der Brennkraftmaschine einfach und ohne großen Aufwand vermieden werden.

Eine alternative Lösung ist darin zu sehen, dass am Mittel zur halbautomatischen Entleerung ein Federmittel angeordnet ist, derart, dass bei der Betätigung zur Entleerung das Entleerungsmittel mit einer Federkraft beaufschlagt wird, welche eine automatische Rückstellung und damit Verschließung des Entleerungsmittels am Ende der Entleerung bewirkt. Hierzu muss über den Zeitraum der Entleerung das Entleerungsmittel durchgehend gegen die Federkraft mit einer Gegenkraft beaufschlagt werden, um ein vollständiges Entleeren des Wechselfilters sicherzustellen. Auch hier wird nach der Entleerung sichergestellt, dass beim anschließenden Starten der Brennkraftmaschine ein Druckaufbau im Flüssigkeitssystem sofort wieder möglich ist.

Nicht von den Ansprüchen erfasst ist einer alternative Ausgestaltung des Flüssigkeitsfilters, die ebenso einen wie oben beschriebenen Wechselfilter mit dazu passendem Trägermodul aufweist, weist das Trägermodul ebenfalls Mittel zur Entleerung des Wechselfilters auf, derart, dass mittels einer äußeren Betätigung das Öffnen eines Durchgangs zur Entleerung des Wechselfilters veranlasst wird und der Durchgang nach dem Entleerungsvorgang durch eine erneute manuelle Betätigung wieder dichtend verschlossen wird. Dies ist die einfache Variante des Flüssigkeitsfilters, in der durch Anlegen einer äußeren Betätigung der Flüssigkeitsfilter manuell entleert wird und anschließend nach der Entleerung vor dem Start der Brennkraftmaschine über wiederum eine äußere Betätigung das Mittel zur Entleerung des Wechselfilters wieder in die dichtende Ausgangsposition zurückgeführt werden muss. Zur Vermeidung einer Fehlbedienung oder des Vergessens des Wiederverschließens des Entleerungsmittels ist es möglich, über einen Sensor beim Nichtschließen des Entleerungsmittels und versuchten Starten der Brennkraftmaschine ein Signal auszugeben, welches entweder optisch und / oder akustisch dem Bediener dieses anzeigt oder sogar ein Starten der Brennkraftmaschine verhindert bis über den Sensor ein Verschließen des Entleerungsmittels erkannt wurde.

Gemäß einer nicht von den Ansprüchen erfassten Ausgestaltung der Erfindung ist das Mittel zur Entleerung des Wechselfilters eine Ablassschraube, welche von außen in das Trägermodul eingeschraubt ist und in Inneren des Trägermoduls bestimmte flüssigkeitsbeaufschlagte Räume dichtend voneinander trennt, derart, dass bei einer axialen Verschiebung der Ablassschraube diese flüssigkeitsbeaufschlagten Räume mit einem Ablasssystem verbunden werden. Diese Ablassschraube ist bevorzugt zur Handbetätigung vorgesehen, d. h. dass sie im Bereich außerhalb des Trägermoduls beispielsweise eine Rändelmutter aufweist, mit welcher die Schraube von Hand gedreht werden kann und somit einer axialen Verschiebung ausgesetzt werden kann, um das Ablassen bzw. Verschließen vorzunehmen. Es ist jedoch auch ebenso möglich, diese Schraube über eine Pneumatik, Hydraulik oder elektromotorisch zu betätigen und das Öffnen und Schließen über einen Schalter oder eine Schalterkombination zu erzielen.

In vorteilhafter Weise weist die nicht von den Ansprüchen erfasste Ablassschraube im Trägermodul eine stirnseitige Axialdichtung zur Trennung von Roh- und Reinseite des Wechselfilters auf und weiterhin ist zur Abdichtung des Trägermodulinnenraums gegenüber der Umgebung die Ablassschraube über eine Radialdichtung abgedichtet, welche derart angeordnet ist, dass eine Abdichtung in jedem Funktionszustand der Schraube gewährleistet ist. Die Ablassschraube trennt also im geschlossenen Zustand Roh- und Reinseite dichtend voneinander und zusätzlich wird dadurch der drucklose Kanal zur Ölwanne ebenfalls von Roh- und Reinseite getrennt. Bei einem Lösen der Ablassschraube und der dadurch erfolgenden Freigabe von Roh- und Reinseite strömt das im Wechselfilter vorhandene Öl der Roh- und der Reinseite gemeinsam in den Kanal, welcher drucklos in die Ölwanne führt. Da die Ablassschraube zur Freigabe der Kanäle eine gewisse axiale Verschiebung erfährt, ist diese mit einer Radialdichtung, welche am Umfang des Schafts der Ablassschraube angeordnet ist, gegenüber dem Trägermodul abgedichtet und sorgt so in diesem Trägermodulschaft für eine sichere Abdichtung im geöffneten und im geschlossenen Zustand.

Gemäß einer vorteilhaften Ausgestaltung der Erfindung weist die, nicht von den Ansprüchen erfasste, Ablassschraube eine Verliersicherung gegenüber dem Trägermodul auf, derart, dass ein Einsetzen der Schraube einfach werkzeuglos möglich, aber ein zerstörungsfreies Trennen der Schraube vom Trägermodul nicht mehr möglich ist. Die Ablassschraube weist einen flexiblen, mit umlaufend angeordneten Schnapphaken versehenden Bereich auf, wobei beim Einsetzen der Schraube in das Trägermodul diese Schnapphaken durch eine Art Einführschräge nach innen gedrückt werden, wobei diese dann im Inneren des Trägermoduls wieder auseinanderspreizen und so ein Herausziehen aus dem Trägermodul oder ein Verlieren unmöglich machen.

Es ist vorteilhaft, ein Schauglas im Flüssigkeitsfilter im unteren Bereich des Wechselfilters, bevorzugt im Trägermodul, anzuordnen, derart, dass durch einen Blick durch das Schauglas eine Aussage über den Flüssigkeitszustand im Wechselfilter möglich ist. So lässt sich einfach ermitteln, ob der Wechselfilter und ein Teil des Trägermoduls vollständig entleert sind und ein Abschrauben des Wechselfilters ohne Flüssigkeitsverlust möglich ist. Dies ist die einfachste Art, eine sichere Aussage über den Flüssigkeitsstand im Flüssigkeitsfilter zu treffen. Das Schauglas kann hierbei aus Glas oder aus einem transparenten Kunststoff sein, es ist bevorzugt im Inneren der Flüssigkeit zugewandten Seite über eine Art Lotuseffekt derart behandelt, dass Schmutzteile und Flüssigkeitsreste nicht am Schauglas haften bleiben.

Gemäß einer weiteren Ausgestaltung der Erfindung ist ein Flüssigkeitsstandsensor im Trägermodul angeordnet, wobei weiterhin eine Anzeige außerhalb des Trägermoduls angeordnet ist, derart, dass über die Anzeige eine Aussage über den Flüssigkeitsstand im Wechselfilter möglich ist. Dies ist einerseits über eine quasi digitale Ein/Aus-Anzeige möglich, d. h. sobald die Anzeige leuchtet ist der Wechselfilter leer und sobald die Anzeige aus ist, ist er wieder gefüllt oder andersherum. Es besteht auch die Möglichkeit einer konkreten Anzeige des Flüssigkeitsstandes in Prozent oder in Volumeneinheiten.

Wie oben beschrieben, besteht eine Ausgestaltung der Erfindung darin, dass ebenfalls wieder ein Flüssigkeitsstandsensor im Trägermodul angeordnet ist, wobei der Flüssigkeitssensor mit dem Mittel zur Entleerung des Wechselfilters korrespondierend verbunden ist und über ein vorgegebenes Signal des Flüssigkeitssensors das Mittel zur Entleerung des Wechselfilters geöffnet und / oder geschlossen wird. Hier bleiben also alle Möglichkeiten offen, dass einerseits über ein Signal des Flüssigkeitssensors der Wechselfilter nur geöffnet oder nur geschlossen wird oder beides durch entsprechende Signale des Flüssigkeitssensors in Gang gebracht wird. Hierzu muss allerdings dann vorher noch eine Willenserklärung" des Bedieners erfolgen, derart, dass ein Filterwechsel vorzunehmen ist oder nicht.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein können.

### Zeichnung

Weitere Einzelheiten der Erfindung werden in der Zeichnung anhand von schematischen Ausführungsbeispielen beschrieben. Hierbei zeigt
- Figur 1: eine perspektivische Ansicht eines erfindungsgemäßen Flüssigkeitsfilters,
- Figuren 2a, 2b: einen Teil des Flüssigkeitsfilters im horizontalen Schnitt im Bereich des Ablassmittels in geöffnetem und geschlossenem Zustand,
- Figuren 3a, 3b: einen vertikalen Schnitt einer, nicht von den Ansprüchen erfassten, alternativen Ausgestaltung des Flüssigkeitsfilters im Bereich des Ablassmittels,
- Figur 4: eine perspektivische Einzelansicht des alternativen, nicht von den Ansprüchen erfassten, Ablassmittels.

### Beschreibung der Ausführungsbeispiele

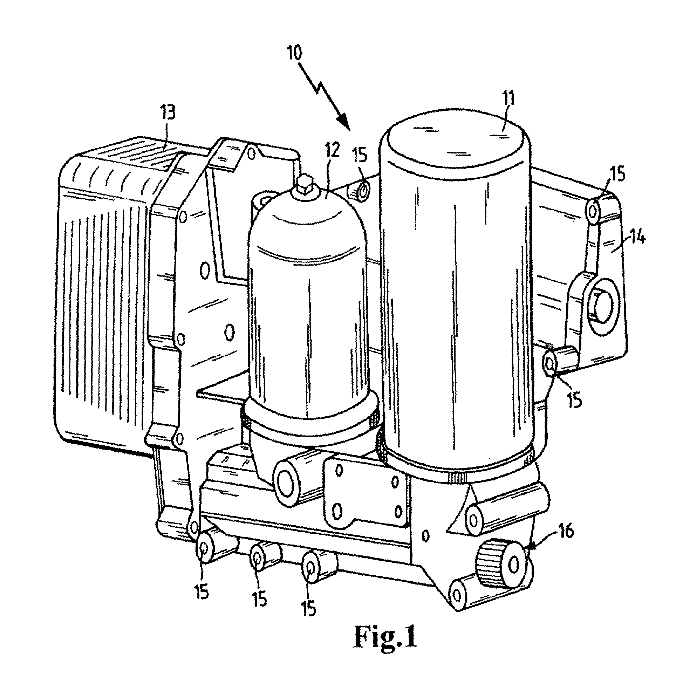

Figur 1 zeigt einen Flüssigkeitsfilter 10 für das Schmieröl einer Brennkraftmaschine mit einem Wechselfilter 11, einer Zentrifuge 12 und einem Ölkühler 13, welche auf einem Trägermodul 14 angeordnet sind. Im Inneren des Trägermoduls 14 sind hier nicht dargestellte Kanäle zur Verbindung der einzelnen Funktionselemente 11, 12, 13, wobei jedoch erfindungsgemäß auch ein Trägermodul 14 mit einem Wechselfilter 11 ausreichen würde. Bevorzugt ist die Zentrifuge 12 im Bypass des Ölzirkulationssystems angebracht und der ungereinigte Ölstrom wird im Ölkühler 13 heruntergekühlt und danach direkt in den Ölwechselfilter 11 zur Filtrierung geleitet. Am Trägermodul 14 sind Befestigungsbohrungen 15 vorgesehen, mit welchen das Trägermodul mitsamt den darauf angeordneten Funktionselementen im Motorraum oder am Motorblock der Brennkraftmaschine direkt angeflanscht werden kann. Im hier nicht dargestellten unteren Bereich des Trägermoduls 14 findet dann die Adaptierung an den Ölkreislauf statt. Unterhalb des Ölwechselfilters 11 ist eine Ablassschraube 16 zur halbautomatischen Entleerung des Ölwechselfilters 11 angeordnet. Hier ist deutlich die Notwendigkeit einer solchen Vorrichtung zu erkennen, da ansonsten bei einem Wechsel des Ölwechselfilters 11 der gesamte Volumeninhalt des Ölwechselfilters 11 an Öl zuerst über das Trägermodul 14 und daraufhin an die Umgebung abgegeben würden. Erfindungsgemäß wird nun vor dem Lösen des Wechselfilters 11 die Ablassschraube 16 axial nach außen gezogen, um den Inhalt des Ölwechselfilters 11 in das hier nicht dargestellte Kurbelgehäuse der Brennkraftmaschine 12 zu entleeren. Im Anschluss der Entleerung ist es dann einfach möglich, ohne ein Herauslaufen von Öl den Wechselfilter 11 gegen einen neuen Filter zu tauschen.

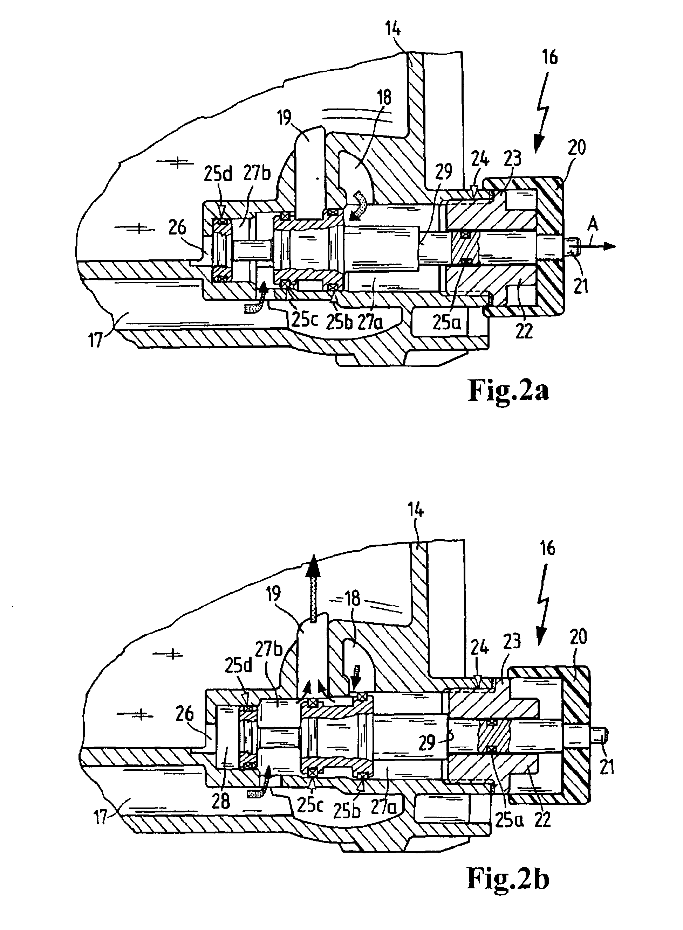

Die Figuren 2a und 2b zeigen einen Horizontalschnitt auf der mittleren Höhe der Ablassschraube 16 durch den interessierenden Bereich im Trägermodul 14. Der Figur 1 entsprechende Bauteile sind mit den gleichen Bezugszeichen versehen. Die Schnittansicht ist von oben aus Richtung des Wechselfilters 11 zu sehen. Das Trägermodul 14 trennt in Kombination mit der Ablassschraube 16 eine Rohölseite 17 von einer Reinölseite 18 und einem Ablass 19, welcher anschließend in die Ölwanne führt. Die Ablassschraube 16 weist an ihrem äußeren, außerhalb des Trägermoduls 14 liegende Ende eine Rändelmutter 20 auf, welche mit einer Kolbenstange 21 verbunden ist. Die Rändelmutter 20 ist dabei bevorzugt aus Kunststoff und die Kolbenstange 21 bevorzugt aus einem Drehstahl. Die Verbindung kann hierbei über eine Presspassung oder eine Kleb- oder sonstige im Stand der Technik bekannte unlösbare Verbindung erfolgen. Die Führung der Ablassschraube 16 erfolgt in einem Führungsstück 22, welches hohlzylindrisch und konzentrisch zur Rändelmutter 20 angeordnet ist, wobei das Führungsstück 22 einen außen umlaufenden Bund 23 und ein Außengewinde 24 aufweist. Der Bund 23 dient zur axialen Anschlagfixierung am Trägermodul 14 und die Befestigung des Führungsstücks 22 im Trägermodul 14 erfolgt über das Gewinde 24, welches korrespondierend zu einem Gewinde im Trägermodul 14 ausgeführt ist. Eine Abdichtung des Inneren des Trägermoduls 14 gegenüber der Umgebung kann im Bereich des Gewindes 24 über beispielsweise eine Einklebepaste oder sonstige im Stand der Technik bekannte Dichtmittel erfolgen. Die Abdichtung der Kolbenstange 21 gegenüber dem Führungsstück 22 erfolgt über einen O-Ring 25a, welcher in einer Nut der Kolbenstange 21 gehalten wird. Die Länge des Führungsstückes 22 ist dabei so lang zu wählen, dass der O-Ring 25a in sämtlichen axialen Verschiebezuständen der Kolbenstange 21 immer im Bereich des Führungsstückes 22 bleibt. Die dichtende Trennung der Rohölseite 17 von der Reinölseite 18 und dem Ablass 19 erfolgt durch weitere an der Kolbenstange 21 angeordnete O-Ringe 25b, 25c, 25d, welche korrespondierend zu der Kontur des Trägermoduls 14 zur Trennung der zwei flüssigkeitsbeaufschlagten Bereiche 27a, 27b und dem sich beim Ziehen der Kolbenstange 21 ergebenden umgebungsdruckbeaufschlagten Raum 28, welcher durch die Durchgangsöffnung 26 mit der Umgebung kommuniziert, angeordnet sind. Dabei ist der Raum 27a mit Reinöl und der Raum 27b mit ungereinigtem Öl beaufschlagt, wobei im Ablasskanal 19 im geschlossenen Zustand der Ablassschraube 16 Kurbelgehäusegas mit dem entsprechenden Kurbelgasdruck vorliegt. Da die Bereiche 27a, 27b durch den im Ölkreislauf herrschenden dynamischen Öldruck beaufschlagt sind, bleibt die Ablassschraube in diesem Zustand geschlossen, so dass die Bereiche voneinander getrennt bleiben. Die Pfeile geben den Verlauf der Flüssigkeit von der Rein- bzw. Rohseite in die flüssigkeitsbeaufschlagten Bereiche 27a, 27b an. Nach Stillstand des Motors zum Wechsel des Wechselfilters 11 wird die Befestigungsschraube 16 an der Rändelmutter 20 in Richtung "A" von Hand aus dem Trägermodul 14 herausgezogen bis die Bewegung durch einen Anschlagbund 29 der Kolbenstange 21 gegenüber dem Führungsstück 22 gestoppt wird. Durch dieses Herausziehen werden die Bereiche 27a, 27b mit dem Ablasskanal 19 verbunden, wodurch dann das Öl durch den statischen Druck im darüber liegenden Wechselfilter 11 durch den Ablass 19 herauslaufen kann. Die Pfeile geben den Weg des Öls von Roh- bzw. Reinseite bis in den Ablass 19 an. Zur Vermeidung eines Unterdrucks in dem umgebungsdruckbeaufschlagten Bereich 28 wird Luft durch die Durchgangsöffnung 26 in den entstehenden Bereich 28 eingesaugt. Nach dem vollständigen Entleeren des Wechselfilters 11 und dem Wechsel desselben erfolgt nach dem Start der Brennkraftmaschine ein Druckaufbau in den flüssigkeitsbeaufschlagten Bereichen 27a, 27b, wodurch die Kolbenstange 21 automatisch wieder entgegen der Richtung "A" in die Schließposition überführt wird. Dieses ist einfach möglich, da den flüssigkeitsdruckbeaufschlagten Bereichen 27a, 27b nur der umgebungsdruckbeaufschlagte Bereich 28 entgegensteht, wobei die dort enthaltene Luft durch den Durchgang 26 wieder an die Umgebung zurückgedrückt werden kann.

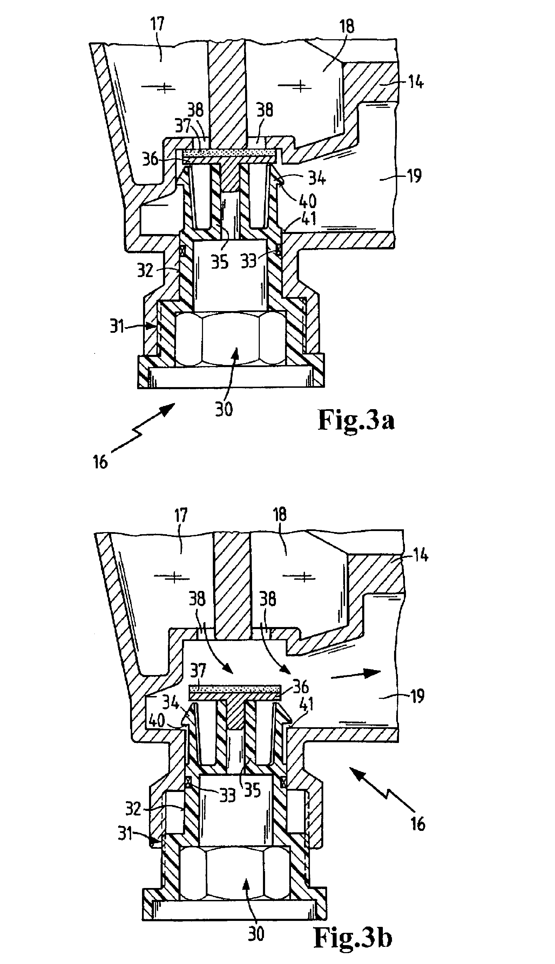

Die Figuren 3a und 3b zeigen eine alternative, nicht von den Ansprüchen erfasste, Form des Ablasssystems in einem vertikalen Schnitt eines Teilbereichs des Trägermoduls 14. Den vorherigen Figuren entsprechende Bauteile sind mit den gleichen Bezugszeichen versehen. Die Ablassschraube 16 weist im äußeren, aus dem Trägermodul 14 herausschauenden Bereich ein Innensechskant 30 zum Ansatz eines entsprechenden Werkzeuges zum einfachen Lösen und Verschließen der Schraube 16 auf. Die Ablassschraube 16 ist dabei bevorzugt aus Kunststoff hergestellt und lässt sich über einen Gewindebereich 31, mit dem die Ablassschraube 16 in das Trägermodul 14 eingeschraubt ist, axial verschieben. Nach einem nach innen gerichteten Absatz der Ablassschraube 16 folgt nun weiter in das Trägermodul 14 hinein ein Dichtbereich 32 zwischen Ablassschraube 16 und Trägermodul 14, wobei die Abdichtung über einen O-Ring 33, welcher in einer Nut der Ablassschraube 16 angeordnet ist, erfolgt. Auch hier trennt die Ablassschraube 16 einen Rohölbereich 17 von einem Reinölbereich 18 und einem Ablasskanal 19, welcher ebenfalls in das Kurbelgehäuse bzw. in die Ölwanne der Brennkraftmaschine mündet. In ungefährer Fortsetzung des Dichtbereichs 32 weist die Ablassschraube 16 mehrere Schnapphaken 34 auf, welche beim Einsetzen der Ablassschraube 16 in das Trägermodul 14 nach innen einfedern und daraufhin, sobald sie den Bereich des Ablasskanals 19 erreichen, wieder in ihre ursprüngliche Position zurückfedern und so einen Widerstand gegenüber dem vollständigen Herausziehen oder Verlieren der Ablassschraube 16 bieten. Die untere gerade Kante 40 der Schnapphaken 34 begrenzt den Axialweg der Ablassschraube 16 durch Anschlag auf einem Axialanschlag 41 des Ablassraums 19. Parallel zu den Schnapphaken 34 wird im Inneren der Ablassschraube 16 ein Haltezylinder 35 weitergeführt, welcher eine scheibenförmige Dichtplatte 36 hält. Die Dichtplatte weist dabei bevorzugt einen Durchmesser in Höhe der Schnapphaken voneinander auf. Auf die Dichtplatte 36 ist weiterhin eine Elastomerdichtung 37 aufgespritzt oder angeklebt, weiche im angezogenen Zustand der Ablassschraube 16 zwei Ablassöffnungen 38 von Rohseite 17 und Reinseite 18 verschließt. Beim Herausschrauben der Ablassschraube 16 gemäß Figur 3b werden die Durchgangsöffnungen 38 freigegeben und der Inhalt des Wechselfilters 11 entleert sich über den Ablasskanal 19 in die Ölwanne. Im Anschluss an den Ablassvorgang muss nach einer vorgegebenen Zeitspanne die Ablassschraube 16 wieder bis zu ihrem Axialanschlag in das Trägermodul 14 eingeschraubt werden, um die Durchgangsbohrungen 38 zu verschließen zur Gewährleistung eines störungsfreien Druckaufbaus im Ölkreislauf.

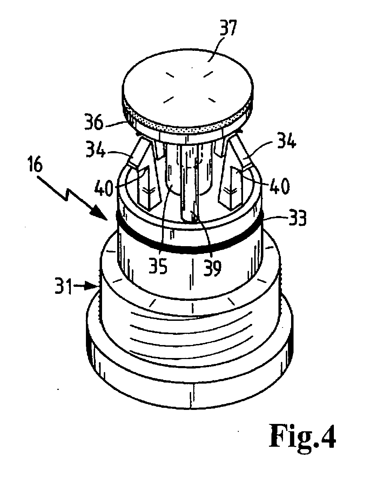

Die Figur 4 zeigt eine perspektivische Ansicht der Ablassschraube 16 des alternativen, nicht von den Ansprüchen erfasste, Ablasssystems gemäß den Figuren 3a, 3b. Den vorherigen Figuren entsprechende Bauteile sind mit den gleichen Bezugszeichen versehen. Die konzentrisch in der Ablassschraube 16 angeordnete Dichtplatte 36 wird durch Haltestifte 39, welche zwischen den Schnapphaken 34 am Umfang der Ablassschraube 16 angeordnet sind, gehalten, um so ein Verkanten der Dichtplatte 36 mitsamt der Dichtung 37 im Trägermodul 14 zu verhindern. Ein Verkanten würde hier zu einer Undichtigkeit im Bereich der Durchgangsbohrungen 38 führen, welches zu vermeiden ist.

## Patentansprüche

1. Flüssigkeitsfilter (10), insbesondere für das Schmieröl einer Brennkraftmaschine, aufweisend wenigstens einen Wechselfilter (11) und ein Trägermodul (14), wobei der Wechselfilter (11) ein Gehäuse mit einem Einlass und einem Auslass für die zu filtrierende Flüssigkeit aufweist, wobei ein mit einer Öffnung nach unten weisender Gehäusetopf vorgesehen ist und in dem Gehäuse ein Filtermedium dichtend zwischen Ein- und Auslass angeordnet ist, wobei der Wechselfilter (11) mit der im wesentlichen nach unten weisenden Öffnung dichtend an dem Trägermodul (14) befestigt ist, **dadurch gekennzeichnet, dass** das Trägermodul (14) Mittel zur halbautomatischen Entleerung des Wechselfilters (11) aufweist, derart, dass mittels einer äußeren Betätigung über das Öffnen eines Durchgangs eine Entleerung des Wechselfilters (11) veranlasst wird und der Durchgang nach dem Entleerungsvorgang automatisch wieder verschlossen wird.

2. Flüssigkeitsfilter (10) nach Anspruch 1, **dadurch gekennzeichnet, dass** das Mittel zur halbautomatischen Entleerung eine Kolbenstange (21) ist, welche axial beweglich ist und wenigstens einen Kanal im Trägermodul (14) durch korrespondierend an der Kolbenstange (21) angeordnete Dichtmittel verschließt, derart, dass durch ein axiales Verschieben der Kolbenstange (21) dieser Kanal geöffnet wird.

3. Flüssigkeitsfilter (10) nach Anspruch 1, **dadurch gekennzeichnet, dass** das Mittel zur halbautomatischen Entleerung eine Kolbenstange (21) ist, welche axial beweglich ist und wenigstens einen Kanal im Trägermodul (14) durch eine radiale Spaltdichtung verschließt, derart, dass durch ein axiales Verschieben der Kolbenstange (21) dieser Kanal geöffnet wird.

4. Flüssigkeitsfilter(10) nach einem der vorhergehenden Ansprüche, **dadurch gekennzeichnent, dass** das Mittel zur halbautomatischen Entleerung im Betriebszustand der Brennkraftmaschine Roh- und Reinseite des Wechselfilters (11) und einen drucklosen Flüssigkeitsablauf dichtend voneinander trennt und dass nach Betätigung des Entleerungsmittel bei stehender Brennkraftmaschine Roh- und Reinseite des Wechselfilters (11) mit dem drucklosen Ablauf verbunden sind, derart, dass die gereinigte und die ungereinigte Flüssigkeit über den drucklosen Ablauf aus dem Wechselfilter (11) und einem Teil des Trägermodul (14)s kontrolliert ausfließt.

5. Flüssigkeitsfilter (10) nach einem der vorhergehenden Ansprüche, **dadurch gekennzelchnet, dass** das Mittel zur halbautomatischen Entleerung werkzeug- und fremdkraftlos von Hand betätigbar ist.

6. Flüssigkeitsfilter (10) nach einem der Ansprüche 1 bis 4, **dadurch gekennzeichnet, dass** das Mittel zur halbautomatischen Entleerung zur Betätigung korrespondierend mit einem Aktuator verbunden ist, derart, dass durch den Aktuator bei einem bestimmten Eingangssignal eine Betätigung des Entleerungsmittel vorgenommen wird.

7. Flüssigkeitsfilter (10) nach einem der vorhergehenden Ansprüche, **dadurch gekennzeichnet, dass** das Mittel zur halbautomatischen Entleerung wenigstens zwei Bereiche innerhalb des Trägermodul (14)s voneinander dichtend trennt, wobei ein erster Bereich mit der Umgebung kommuniziert und ein zweiter Bereich mit Flüssigkeit beaufschlagt ist, derart, dass der erste Bereich bei der Betätigung des Entleerungsmittels mit Umgebungsdruck beaufschlagt ist und der zweite Bereich bei der Entleerung nur mit der durch die stehende Brennkraftmaschine nicht druckbeaufschlagten Flüssigkeit kommuniziert, wobei nach Abschluss der Entleerung bei Start der Brennkraftmaschine im zweiten Bereich ein hydraulischer Druck aufgebaut wird, welcher das Mittel gegen den geringeren Umgebungsdruck des ersten Bereiches automatisch wieder in die verschlossene Ausgangslage zurücksetzt.

8. Flüssigkeitsfilter (10) nach einem der Ansprüche 1 bis 6, **dadurch gekennzeichnet, dass** am Mittel zur halbautomatischen Entleerung ein Federmittel angeordnet ist, derart, dass bei der Betätigung zur Entleerung das Entleerungsmittel mit einer Federkraft beaufschlagt ist, welche eine automatische Rückstellung und damit Verschlie-ßung des Entleerungsmittels am Ende der Entleerung bewirkt.

9. Flüssigkeitsfilter (10) nach einem der vorhergehenden Ansprüche, **dadurch gekennzeichnet, dass** ein Schauglas im Flüssigkeitsfilter (10) im unteren Bereich des Wechselfilters (11), bevorzugt im Trägermodul (14), angeordnet ist, derart, dass durch einen Blick durch das Schauglas eine Aussage über den Flüssigkeitsstand im Wechselfilter (11) möglich ist.

10. Flüssigkeitsfilter (10) nach einem der vorhergehenden Ansprüche, **dadurch gekennzeichnet, dass** ein Flüssigkeitsstandsensor im Trägermodul (14) angeordnet ist, wobei weiterhin eine Anzeige außerhalb des Trägermodul (14)s angeordnet ist, derart, dass über die Anzeige eine Aussage über den Flüssigkeitsstand im Wechselfilter (11) möglich ist.

11. Flüssigkeitsfilter (10) nach einem der vorhergehenden Ansprüche, **dadurch gekennzeichnen dass** ein Flüssigkeitsstandsensor im Trägermodul (14) angeordnet ist, wobei der Flüssigkeitssensor mit dem Mittel zur Entleerung des Wechselfilters (11) korrespondierend verbunden ist und über ein vorgegebenes Signal des Flüssigkeitssensors das Mittel zur Entleerung des Wechselfilters (11) geöffnet und / oder geschlossen wird.

## Claims

1. Liquid filter (10), more especially for the lubricating oil of an internal combustion engine, the said liquid filter including at least one replaceable filter (11) and one carrier module (14), wherein the replaceable filter (11) includes a housing with an inlet and an outlet for the liquid to be filtered, the said housing comprising a vessel with a downwardly oriented opening and a filter medium being disposed in the housing in a sealing manner between inlet and outlet, wherein the replaceable filter (11) with the opening pointing substantially downwards is secured on the carrier module (14) in a sealing manner, **characterised in that** the carrier module (14) includes means for the semi-automatic emptying of the replaceable filter (11), such that the replaceable filter (11) is caused to empty by means of an external actuation that opens a passage and the passage is closed again in an automatic manner once the emptying process has been completed.

2. Liquid filter (10) according to claim 1, **characterised in that** the means for the semi-automatic emptying is a piston rod (21), which is axially displaceable and closes at least one channel in the carrier module (14) by means of sealing means that are disposed in a corresponding manner at the piston rod (21), such that the said channel is opened by means of an axial displacement of the piston rod (21).

3. Liquid filter (10) according to claim 1, **characterised in that** the means for the semi-automatic emptying is a piston rod (21), which is axially displaceable and closes at least one channel in the carrier module (14) by means of a radial gap seal, such that the said channel is closed by means of an axial displacement of the piston rod (21).

4. Liquid filter (10) according to one of the preceding claims, **characterised in that** the means for the semi-automatic emptying, in the operating state of the internal combustion engine, separates non filtered and filtered side of the replaceable filter (11) and a pressureless liquid outlet sealingly from one another and **in that**, after actuating the emptying means, with the internal combustion engine not moving, the non filtered and filtered side of the replaceable filter (11) are connected to the pressureless outlet, such that the filtered and the non filtered liquid flows out of the replaceable filter (11) and out of a part of the carrier module (14) in a controlled manner via the pressureless outlet.

5. Liquid filter (10) according to one of the preceding claims, **characterised in that** the means for the semi-automatic emptying is actuatable in a manual manner without tooling or outside force.

6. Liquid filter (10) according to one of claims 1 to 4, **characterised in that** the means for the semi-automatic emptying is connected in a corresponding manner for actuation to an actuator, such that an actuation of the emptying means is accomplished by means of an actuator at a certain input signal.

7. Liquid filter (10) according to one of the preceding claims, **characterised in that** the means for the semi-automatic emptying separates at least two regions internally of the carrier module (14) one from the other in a sealing manner, wherein a first region communicates with the surrounding area and a second region is impinged upon with liquid, such that when the emptying means are actuated the first region is impinged upon with atmospheric pressure and the second region, during the emptying process, only communicates with the liquid that is not impinged upon with pressure as the internal combustion engine is not running, wherein, once the emptying process has been completed, when the engine is started up hydraulic pressure is built up in the second region, the said hydraulic pressure resetting the means back into the closed initial position in an automatic manner against the lower atmospheric pressure of the first region.

8. Liquid filter (10) according to one of claims 1 to 6, **characterised in that** a spring means is disposed on the means for semi-automatic emptying, such that when the emptying process is actuated, the emptying means is impinged upon by a spring force, which effects an automatic resetting and consequently a closing of the emptying means at the end of the said emptying process.

9. Liquid filter (10) according to one of the preceding claims, **characterised in that** an inspection glass is disposed in the liquid filter (10) in the lower region of the replaceable filter (11), preferably in the carrier module (14), such that it is possible to ascertain the liquid level in the replaceable filter (11) by one glance.

10. Liquid filter (10) according to one of the preceding claims, **characterised in that** a liquid level sensor is disposed in the carrier module (14), wherein, in addition, a display is disposed externally of the carrier module (14), such that it is possible to ascertain the liquid level in the replaceable filter (11) by one glance.

11. Liquid filter (10) according to one of the preceding claims, **characterised in that** a liquid level sensor is disposed in the carrier module (13), wherein the liquid level sensor is connected in a corresponding manner to the means for emptying the replaceable filter (11) and the means for emptying the replaceable filter is opened and/or closed by means a predetermined signal of the liquid sensor.

## Revendications

1. Filtre à liquide (10), notamment pour filtrer l'huile d'un moteur à combustion interne, qui comprend au moins un filtre échangeable (11) et un module porteur (14) et dans lequel le filtre échangeable (11) possède un boîtier avec une entrée et une sortie pour le liquide à filtrer et un pot percé d'une ouverture dirigée vers le bas, et dans le boîtier un milieu filtrant est disposé de manière étanche entre l'entrée et la sortie, le filtre échangeable (11) étant, avec son ouverture dirigée vers le bas, fixé de manière étanche sur le module porteur (14),
**caractérisé en ce que**
le module porteur (14) présente des moyens pour vidanger semi-automatiquement le filtre échangeable (11) de manière à permettre, par une intervention extérieure produisant l'ouverture d'un passage, une vidange du filtre (11), ce passage étant automatiquement refermé après la vidange.

2. Filtre à liquide (10) selon la revendication 1,
**caractérisé en ce que**
le moyen pour vidanger semi-automatiquement est une tige de piston (21), qui est mobile axialement et qui obture au moins un canal dans le module porteur (14) par un moyen d'étanchéité prévu en correspondance sur la tige de piston (21), un coulissement axial de la tige de piston (21) produisant l'ouverture du canal.

3. Filtre à liquide (10) selon la revendication 1,
**caractérisé en ce que**
le moyen pour vidanger semi-automatiquement est une tige de piston (21), qui est mobile axialement et qui obture au moins un canal dans le module porteur (14), au moyen d'une étanchéité de fente radiale, un coulissement axial de la tige de piston (21) produisant l'ouverture du canal.

4. Filtre à liquide (10) selon une des revendications précédentes,
**caractérisé en ce que**
quand le moteur à combustion interne est en fonctionnement, le moyen de vidange semi-automatique sépare de manière étanche le côté brut ainsi que le côté purifié du filtre échangeable (11), d'une sortie de liquide sans pression et, quand le moteur est arrêté, ce moyen de vidange met en liaison le côté brut et le côté purifié avec la sortie sans pression de manière que le liquide brut et le liquide purifié s'écoulent du filtre à travers cette sortie s'écoulant du filtre (11) et d'une partie du module porteur (14), de manière contrôlée.

5. Filtre à liquide (10) selon une des revendications précédentes,
**caractérisé en ce que**
le moyen de vidange semi-automatique peut être actionné à la main, au moyen d'un outil, sans assistance extérieure.

6. Filtre à liquide (10) selon une des revendications 1 à 4,
**caractérisé en ce que**
le moyen de vidange semi-automatique, pour sa manoeuvre, est relié à un actionneur de manière que celui-ci actionne le moyen de vidange à la suite d'un certain signal d'entrée.

7. Filtre à liquide (10) selon une des revendications précédentes,
**caractérisé en ce que**
le moyen de vidange semi-automatique sépare l'une de l'autre au moins deux zones à l'intérieur du module porteur (14) dont la première communique avec l'environnement tandis que la seconde est soumise à l'action du liquide de manière que la première zone, quand est actionné le moyen de vidange, est mise à la pression de l'environnement tandis que la seconde zone, lors de la vidange, communique seulement avec le liquide qui, du fait de l'arrêt du moteur, n'est plus sous pression, et à la fin de la vidange, le démarrage du moteur crée dans la seconde zone une pression hydraulique qui ramène automatiquement le moyen à sa position initiale fermée, contre la pression ambiante faible régnant dans la première zone.

8. Filtre à liquide (10) selon une des revendications 1 à 6,
**caractérisé en ce que**
sur le moyen de vidange semi-automatique est disposé un moyen élastique ayant pour effet, quand est actionnée la vidange, de soumettre le moyen de vidange à une force élastique qui, à la fin de la vidange, rappelle automatiquement ce moyen qui donc se ferme.

9. Filtre à liquide (10) selon une des revendications précédentes,
**caractérisé en ce que**
un regard est disposé dans la zone inférieure du filtre échangeable (11), de préférence dans le module porteur (14), de manière qu'un coup d'oeil à travers ce regard permet d'être informé de l'état du liquide dans le filtre échangeable (11).

10. Filtre à liquide (10) selon une des revendications précédentes,
**caractérisé en ce qu'**
un capteur d'état du liquide est disposé dans le module porteur et de plus, à l'extérieur de celui-ci, un indicateur permet d'être informé de l'état du liquide dans le filtre.

11. Filtre à liquide (10) selon une des revendications précédentes,
**caractérisé en ce qu'**
un capteur d'état du liquide disposé dans le module porteur (14) est relié au moyen de vidange du filtre échangeable (11), un signal prédéfini envoyé par le capteur produisant l'ouverture et/ou la fermeture du moyen de vidange du filtre échangeable (11).
